# EUROPÄISCHE PATENTSCHRIFT

(11) **EP 1 597 953 B1**
(45) Veröffentlichungstag und Bekanntmachung des Hinweises auf die Patenterteilung: **01.07.2009**
(21) Anmeldenummer: 05010999.0
(22) Anmeldetag: 20.05.2005
(51) Int. Cl.: A01B 73/00, A01B 59/06, A01D 78/10

(54) **Landwirtschaftliche Maschine**
Agricultural machine
Machine agricole

(30) Priorität: 21.05.2004 DE 102004025478
(43) Veröffentlichungstag der Anmeldung: 23.11.2005
(73) Patentinhaber: Maschinenfabrik Bernard Krone GmbH, 48480 Spelle (DE)
(72) Erfinder: Krone, Bernard, Dr.-Ing. E.h., 48480 Spelle (DE); Horstmann, Josef, Dr.-Ing., 49479 Ibbenbüren (DE); Hermes, Klaus, 48493 Wettringen (DE); Helper, Erik, Dipl.-Ing., 48465 Quendorf (DE)

(56) Entgegenhaltungen:
- EP-A- 0 370 304
- DE-A1- 2 216 339
- DE-A1- 3 601 354
- FR-A- 1 318 857
- US-A- 4 069 874

## Beschreibung

Die Erfindung bezieht sich auf eine landwirtschaftliche Maschine nach dem Oberbegriff des Anspruchs 1, welche zumindest ein über eine Stützeinrichtung sich in der Arbeits- und Betriebsstellung auf dem Erdboden abstützendes Bearbeitungsglied umfasst. Eine von zahlreichen möglichen Ausfiihrungsformen einer solchen landwirtschaftlichen Maschine ist eine Heuwerbungsmaschine zum Zusammenführen von auf dem Boden liegendem Erntegut zu Schwaden, welche an eine Dreipunkthubeinrichtung einer landwirtschaftlichen Zug- und Antriebsmaschine anbaubar ist und während des Transportes von dieser getragen wird.

Eine bereits bekannte landwirtschaftliche Maschine dieser Art wird in der DE 36 01 354 A1 offenbart und umfasst ein als Kreiselrechen ausgebildetes Bearbeitungsglied, das über ein Maschinengestell gelenkig mit einem Tragrahmen verbunden ist, der an eine Dreipunktaufhängung eines Schleppers anbaubar ist. Damit der Kreiselrechen aus einer bodennahen Arbeits- und Betriebsstellung, in der dieser sich beispielsweise über Stützräder auf dem Erdboden abstützt, in eine ausgehobene Transportstellung überführt werden kann, erstrecken sich zwischen dem Tragrahmen und dem Maschinengestell Koppelstangen, welche in der ausgehobenen Transportstellung ihre kürzeste Länge aufweisen und somit die maximale Aushubhöhe des Kreiselrechens bestimmen. In der Arbeits- und Betriebstellung nehmen die Koppelstangen während der Geradeausfahrt eine Länge an, die größer als die Minimallänge ist, während bei der Kurvenfahrt der landwirtschaftlichen Maschine die Koppelstange an der Kurveninnenseite gegebenenfalls ganz eingefahren und die Koppelstange an der Kurvenaußenseite ausgefahren ist. Das Verhältnis zwischen der minimalen und der maximalen Länge der Koppelstangen ist somit der bestimmende Faktor für die Größe des Krümmungsradius der bei der Kurvenfahrt durchfahrenen Kurvenbahn. Ein Mangel der vorstehend beschriebenen Ausführungsform besteht darin, dass eine weitere erwünschte Reduzierung des möglichen Krümmungsradius bei der Kurvenfahrt dazu führt, dass in der Transportstellung der landwirtschaftlichen Maschine keine ausreichende Aushubhöhe mehr erreichbar ist.

Aufgabe der Erfindung ist es daher, eine landwirtschaftliche Maschine der vorstehend angegebenen Art dahingehend weiter zu bilden, dass engere Kurvenfahrten ermöglicht werden, ohne dass damit eine Verringerung der Aushubhöhe in der Transportstellung einhergeht.

Zur Lösung dieser Aufgabe zeichnet sich die landwirtschaftliche Maschine der eingangs genannten Art durch die im Anspruch 1 angegebenen Merkmale aus. Hinsichtlich weiterer vorteilhafter Ausgestaltungen wird auf die weiteren Ansprüche verwiesen.

Durch die von der Erfindung vorgeschlagene Lösung wird erreicht, dass bei einer, an eine Dreipunkthubeinrichtung ankoppelbare, zumindest ein über eine Stützeinrichtung sich auf dem Erdboden abstützendes Bearbeitungsglied aufweisenden und in einer ausgehobenen Transportstellung von der Dreipunkthubeinrichtung getragenen Landmaschine in der Arbeits- und Betriebsstellung wesentlich engere Kurvenfahrten möglich sind, ohne dass dabei, wie im Stand der Technik eine Verringerung der Aushubhöhe des Bearbeitungsgliedes einhergeht. Dies wird dadurch ermöglicht, dass bei der, über einen Tragrahmen gelenkig an einem Anbaurahmen der Dreipunkthubeinrichtung angebrachten, landwirtschaftlichen Maschine, die in der Arbeits- und Betriebsstellung um eine etwa vertikale und eine horizontale und quer zur Fahrtrichtung ausgerichtete Achse frei schwenkbar und in einer ausgehobenen Transportstellung durch die Wirkung von Stützstreben in einer, in Fahrtrichtung ausgerichteten Lage festlegbar ist, für die Anlenkung der Stützstreben am Tragrahmen der landwirtschaftlichen Maschine eine gemeinsame Stützanordnung vorgesehen ist, die über eine, eine Verschiebe- und Schwenkbewegung zulassende Verbindung an dem Tragrahmen gehaltert ist. Diese gemeinsame Stützanordnung eröffnet die Möglichkeit, dass eine Schwenkplatte der Stützanordnung in zwei charakteristische Positionen überführt werden kann. In einer ersten Position kann die Schwenkplatte der Stützanordnung eine Schwenkbewegung um eine etwa vertikale Achse ausführen, so dass hierdurch ein größerer Schwenkwinkel des Anbaurahmen der Dreipunkthubeinrichtung gegenüber dem Tragrahmen frei gegeben wird und die landwirtschaftliche Maschine in der Arbeits- und Betriebsstellung somit einer, einen kleineren Krümmungsradius aufweisenden Kurvenbahn während einer Kurvenfahrt folgen kann. In der zweiten Position wirkt die Schwenkplatte der Stützanordnung mit einer dafür vorgesehenen Anlagefläche mit einer Anlagefläche einer gabelförmig ausgebildeten Halterung des Tragrahmens zusammen, so dass sich dadurch eine ortsfeste Ausrichtung der Schwenkplatte zum Tragrahmen und damit auch eine in Fahrtrichtung ausgerichtete Lage des Bearbeitungsgliedes der landwirtschaftlichen Maschine in der Transportstellung ergibt. Um diese beiden Positionen zu ermöglichen, ist die Schwenkplatte der Stützanordnung über eine Langlochführung mit der gabelförmigen Halterung verbunden. Durch diese einfache konstruktive Maßnahme ergibt sich in der Arbeits- und Betriebsstellung eine verbesserte Ausnutzung des Verhältnisses zwischen der minimalen und der maximalen Länge der Stützstreben, während in der Transportstellung aufgrund der unverändert gebliebenen Minimallänge der Stützstreben eine Verringerung der Aushubhöhe nicht eintritt.

Der vorteilhafte Aspekt der Erfindung lässt sich bei zahlreichen landwirtschaftlichen Maschinen anwenden, wobei vorliegend insbesondere an eine Heuwerbungsmaschine zum Zusammenführen von auf dem Erdboden liegendem Erntegut zu Erntegutschwaden gedacht ist. Die vorteilhaften Wirkungen der Erfindung können grundsätzlich an allen Maschinen Anwendung finden, die an eine Dreipunkthubeinrichtung einer Zug- und Antriebsmaschine ankoppelbar sind, in der Arbeits- und Betriebsstellung beispielsweise durch Stützräder oder dgl. Stützeinrichtung abgestützt über eine Bearbeitungsfläche geführt werden und in der Lage sein müssen, vorgegebenen Kurvenverläufen zu folgen.

Weitere Ausbildungen der Erfindung können davon ausgehen, dass die vorzugsweise in einer viereckförmigen Anordnung angebrachten Stützstreben entweder frei oder gedämpft auf eine Veränderung ihrer Länge reagieren. Weiterhin ist es vorstellbar, dass einer Überführung der Stützstreben in ihre minimale Länge eine Federkraft entgegenwirkt. Diese Maßnahmen dienen einer exakten Anpassung der landwirtschaftliche Maschine an unterschiedliche Einsatzverhältnisse, wobei in diesem Zusammenhang beispielsweise eine verbessertes Entgegenwirken einer Hangabdriftneigung oder eine von Pendelbewegungen der landwirtschaftlichen Maschine freie Führung auch bei höheren Arbeitsgeschwindigkeiten als Grund anzugeben ist.

Weitere Vorteile und Einzelheiten der Erfindung ergeben sich aus der nachfolgenden Beschreibung und der Zeichnung. In der Zeichnung stellt im einzelnen dar:
- Fig.1: eine teilweise abgebrochen dargestellte Seitenansicht einer erfindungsgemäßen landwirtschaftlichen Maschine zum Zusammenführen von auf dem Erdboden liegendem Erntegut in der Arbeits- und Betriebsstellung;
- Fig.2: eine Seitenansicht ähnlich Fig.1, wobei die landwirtschaftliche Maschine sich in der Transportstellung befindet;
- Fig.3: eine Ansicht von oben auf eine Maschine nach Fig. 1 in der Arbeits- und Betriebsstellung bei Geradeausfahrt;
- Fig.4: eine Ansicht von oben auf eine Maschine nach Fig. 1 in der Arbeits- und Betriebsstellung bei Kurvenfahrt;
- Fig.5: eine perspektivische Darstellung eines vorderen Teilausschnittes der Maschine nach Fig. 4;

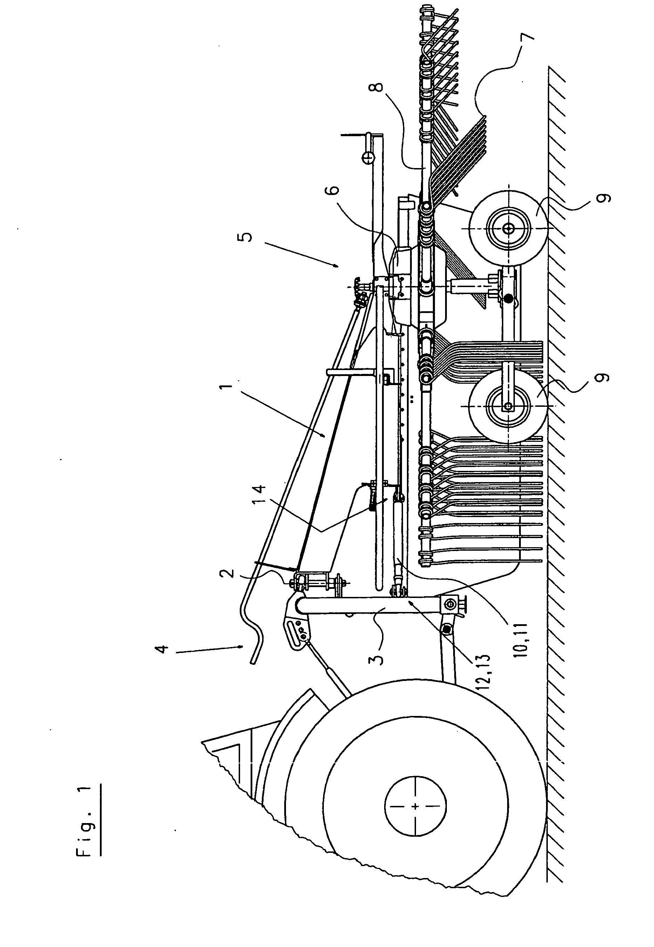

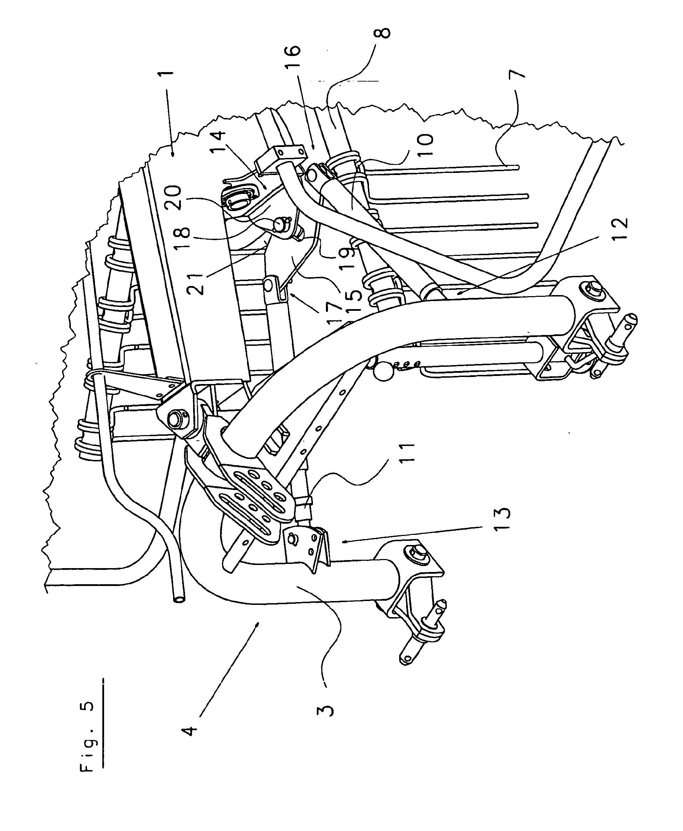

Eine denkbare Ausführungsform einer landwirtschaftlichen Maschine mit den erfinderischen Gestaltungsmerkmalen ist in Fig. 1 in einer Arbeits- und Betriebsstellung wiedergegeben. Die als Kreiselschwader zum Zusammenführen von auf dem Erdboden liegendem Erntegut zu Erntegutschwaden ausgebildete landwirtschaftliche Maschine umfasst hier einen Tragrahmen 1, welcher im vorderen Bereich des Kreiselschwaders um zumindest eine etwa vertikale Achse 2 und um eine horizontale und quer zur Fahrtrichtung ausgerichtete Achse schwenkbar an einem Anbaurahmen 3 einer Dreipunkthubeinrichtung 4 aufgehängt ist. Zum Antrieb bzw. zur Führung des Kreiselschwaders über eine Bearbeitungsfläche ist eine als landwirtschaftlicher Ackerschlepper ausgeführte Zug- und Antriebsmaschine vorgesehen. Als Bearbeitungsglied 5 weist die hier dargestellte landwirtschaftliche Maschine einen Kreiselrechen 6 auf, der mit um eine etwa vertikale Achse umlaufenden und mit Zinken 7 bestückten Zinkenträgern 8 bestückt ist. In der Arbeits- und Betriebsstellung ist der Kreiselschwader über Stützräder 9 gegenüber dem Erdboden abgestützt. Hierzu können allerdings auch andere Stützeinrichtungen vorgesehen sein. Eine weitere Verbindung zwischen dem Anbaurahmen 3 der Dreipunkthubeinrichtung 4 und dem Tragrahmen 1 ist durch Stützstreben 10,11 hergestellt, die sich zwischen Anlenkstellen 12,13 des Anbaurahmens 3 und einer gemeinsamen Stützanordnung 14 des Tragrahmens 1 erstrecken. Zur Ausbildung der Stützanordnung 14 wird im Beschreibungsteil zu Fig. 5 noch näher eingegangen. Wie aus dieser Figur weiterhin ersichtlich ist, befinden sich die Stützstreben 10,11 in der Arbeits- und Betriebsstellung in einem Zustand, bei dem die Länge der Stützstreben 10,11 einen Wert aufweist, der zwischen der Minimal- und der Maximallänge liegt.

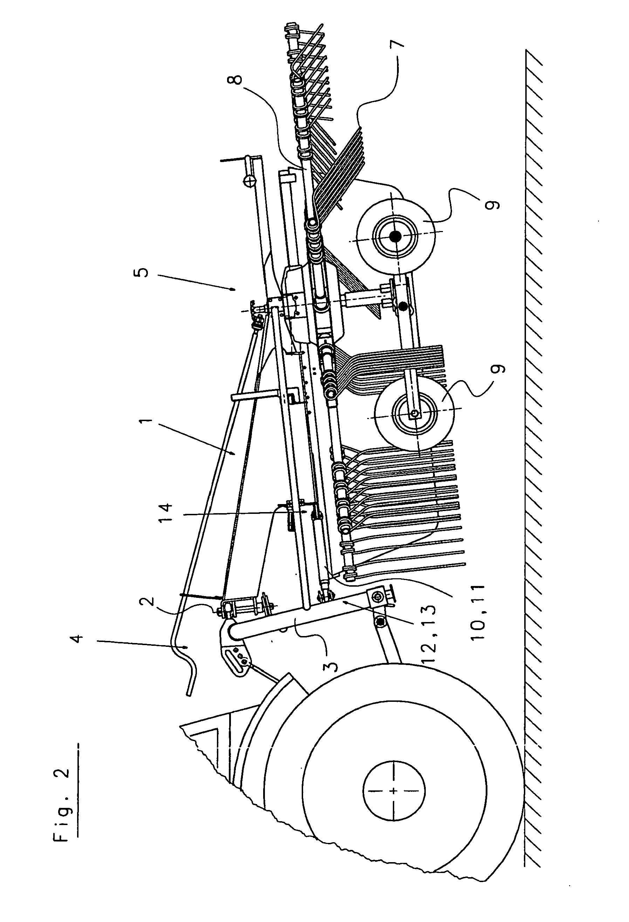

In Fig. 2 ist die als Kreiselschwader ausgebildete landwirtschaftliche Maschine in einer ausgehobenen Transportstellung dargestellt. Diese Darstellung zeigt, dass beim Überführen des Kreiselschwaders aus der Arbeits- und Betriebsstellung in die ausgehobene Transportstellung die Stützstreben 10,11 auf ihre Minimallänge zusammengeschoben werden, wobei der Kreiselschwader dann aus der frei beweglichen, auch Kurvenfahrten ermöglichenden Lage (Arbeits-und Betriebsstellung) in eine in Fahrtrichtung ausgerichtete festgelegte Lage verbracht wird. Dabei führt der Kreiselschwader auch eine Schwenkbewegung um eine horizontale und quer zur Fahrtrichtung ausgerichtete Achse aus. Eine solche Schwenkbewegung beeinträchtigt ab einem gewissen Ausmaß die maximale Aushubhöhe, so dass eine Verringerung der Minimallänge der Stützstreben 10,11 keine Lösung zur Verringerung des Krümmungsradius bei einer Kurvenfahrt ist.

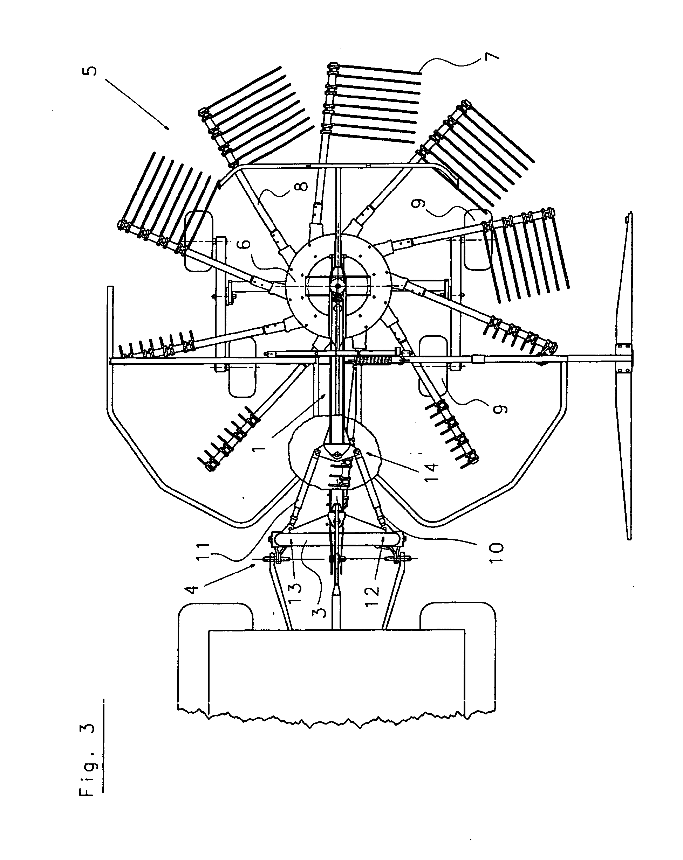

Aus Fig. 3 geht ein erfindungsgemäß gestalteter Kreiselschwader in einer Ansicht von oben hervor, wobei sich der Kreiselschwader in der Arbeits- und Betriebsstellung bei der Geradeausfahrt befindet. Wie auch hier deutlich zu erkennen ist, weisen die Stützstreben 10,11 zusammen mit dem Anbaurahmen 3 und der gemeinsamen Stützanordnung 14 eine viereckförmige Anordnung auf. Die Stützstreben 10,11 haben hier ein Längenmaß (wie auch in Fig.1), das zwischen der Minimal- und der Maximallänge liegt.

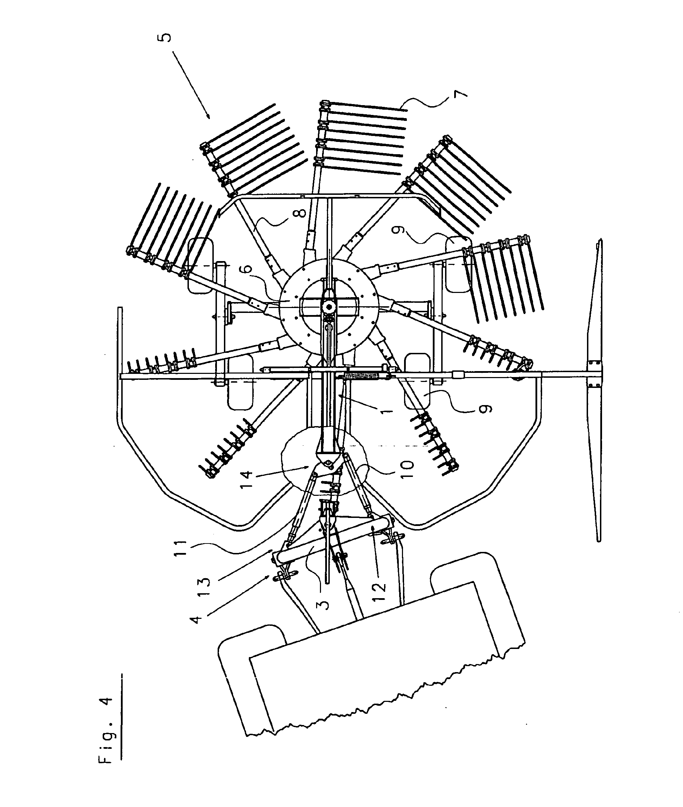

Fig. 4 zeigt den Kreiselschwader aus Fig. 3 während einer Kurvenfahrt, wobei die der Kurveninnenseite zugewandte Stützstrebe 10 auf ihre Minimallänge zusammengeschoben ist, während die Stützstrebe 11 an der Kurvenaußenseite ausgefahren ist.
In Fig. 5 ist in einer vergrößerten, perspektivischen Darstellung der vordere Bereich des Kreiselschwaders nach Fig. 4 während der Kurvenfahrt näher veranschaulicht. Wie aus dieser Darstellung hervorgeht, umfasst die Stützanordnung 14 im wesentlichen eine Schwenkplatte 15, an deren äußeren Enden Anlenkstellen 16,17 ausgebildet sind. Über einen Bolzen 18 ist die Schwenkplatte 15 mit ihrer Langlochführung 19 in einer gabelförmigen Halterung 20 schiebe-und schwenkbeweglich gehaltert. Wie auch hier erkennbar, ist die Stützstrebe 10 ganz eingefahren, während die Stützstrebe 11 ausgefahren ist. Der vorteilhafte Effekt der Erfindung ergibt sich daraus, dass sich die Schwenkplatte 15 der Stützanordnung 14 während der Kurvenfahrt innerhalb der Langlochführung 19 in Fahrtrichtung verschieben kann und somit einen kleineren Krümmungsradius während der Kurvenfahrt ermöglicht.

Bei der Überführung des Kreiselschwaders aus der Arbeits- und Betriebsstellung in die ausgehobene Transportstellung wird zunächst die Schwenkplatte 15 innerhalb der Langlochführung 19 entgegen der Fahrtrichtung verschoben, bis eine hintere Anlagefläche 21 der Schwenkplatte 15 an einer Anlagefläche der gabelförmigen Halterung 20 zur Anlage kommt. Während die Stützstreben 10,11 auf ihre Minimallänge eingefahren werden, beginnt der eigentliche Aushebvorgang, wobei der Kreiselschwader in eine in Fahrtrichtung ausgerichtete Lage fixiert und ausgehoben wird.

Weiterbildungen der Erfindung können davon ausgehen, dass die vorzugsweise in einer viereckförmigen Anordnung angebrachten Stützstreben 10,11 entweder frei oder gedämpft auf eine Veränderung ihrer Länge reagieren. Weiterhin ist es vorstellbar, dass einer Überführung der Stützstreben 10,11 in ihre minimale Länge eine Federkraft entgegenwirkt. Diese Maßnahmen dienen einer exakten Anpassung der landwirtschaftliche Maschine an unterschiedliche Einsatzverhältnisse, wobei in diesem Zusammenhang beispielsweise eine verbessertes Entgegenwirken einer Hangabdriftneigung oder eine von Pendelbewegungen der landwirtschaftlichen Maschine freie Führung auch bei höheren Arbeitsgeschwindigkeiten zu erwähnen ist.

Obwohl in der Beschreibung und in der dazugehörigen Zeichnung bereits vorteilhafte Ausführungen beschrieben wurden, so ist es auch vorstellbar, die Schwenkplatte mit einem fest zugeordneten Bolzen zu versehen, der dann in einer Langlochführung der gabelförmigen Halterung verschieb- und verschwenkbar gehaltert ist.

## Patentansprüche

1. Landwirtschaftliche Maschine mit zumindest einem, sich über mindestens eine Stützeinrichtung auf dem Erdboden abstützenden Bearbeitungsglied (5), welches über einen Tragrahmen (1) gelenkig an eine Dreipunkhubeinrichtung (4) einer landwirtschaftlichen Zug- und Antriebsmaschine anbringbar ist und mittels des Tragrahmens (1) in der Arbeits- und Betriebsstellung gegenüber der Dreipunkthubeinrichtung (4) um eine etwa vertikale Achse und um eine horizontale und quer zur Fahrtrichtung ausgerichtete Achse frei schwenkbar und in einer ausgehobenen Transportstellung durch die Wirkung von Stützstreben (10,11) selbsttätig in einer in Fahrtrichtung ausgerichteten Lage festlegbar ist, wobei die Stützstreben (10,11) sich zwischen Anlenkstellen eines Anbaurahmens (3) der Dreipunkthubeinrichtung (4) und Anlenkstellen des Tragrahmens (1) erstrecken, **dadurch gekennzeichnet, dass** zur Anlenkung der Stützstreben (10,11) an dem Tragrahmen (1) eine gemeinsame Stützanordnung (14) vorgesehen ist, welche über eine, eine Verschiebe- und eine Schwenkbewegung zulassende Verbindung an dem Tragrahmen (1) gehaltert ist.

2. Landwirtschaftliche Maschine nach Anspruch 1, **dadurch gekennzeichnet, dass** die Stützanordnung (14) zur Anlenkung der Stützstreben (10,11) an dem Tragrahmen (1) in der Arbeits- und Betriebsstellung des Bearbeitungsgliedes (5) eine Schwenkbewegung um eine etwa vertikale Achse (2) zulässt.

3. Landwirtschaftliche Maschine nach Anspruch 1, **dadurch gekennzeichnet, dass** die Stützanordnung (14) zur Anlenkung der Stützstreben (10,11) an dem Tragrahmen (1) in der Transportstellung eine in Fahrtrichtung ausgerichtete Lage des Bearbeitungsgliedes (5) ermöglicht.

4. Landwirtschaftliche Maschine nach einem der Ansprüche 1 bis 3, **dadurch gekennzeichnet, dass** die Stützanordnung (14) eine Schwenkplatte (15) umfasst, welche über einen Bolzen (18) in einer gabelförmigen Halterung (20) angeordnet ist.

5. Landwirtschaftliche Maschine nach einem der Ansprüche 1 bis 4, **dadurch gekennzeichnet, dass** die Schwenkplatte (15) eine Langlochführung (19) zur Aufnahme des Bolzens (18) aufweist.

6. Landwirtschaftliche Maschine nach einem der Ansprüche 1 bis 5, **dadurch gekennzeichnet, dass** die Schwenkplatte (15) eine Anlagefläche (21) umfasst, die mit einer Anlagefläche der gabelförmigen Halterung (20) zusammenwirkt.

7. Landwirtschaftliche Maschine nach einem der Ansprüche 1 bis 6, **dadurch gekennzeichnet, dass** die Stützstreben (10,11) mit dem Anlenkstellen am Anbaurahmen (3) und der Schwenkplatte (15) eine viereckförmige Anordnung bilden.

8. Landwirtschaftliche Maschine nach einem der Ansprüche 1 bis 6, **dadurch gekennzeichnet, dass** die Länge der Stützstreben (10,11) teleskopisch veränderbar ist.

9. Landwirtschaftliche Maschine nach Anspruch 8, **dadurch gekennzeichnet, dass** die Stützstreben (10,11) in ihrer Länge frei veränderbar sind.

10. Landwirtschaftliche Maschine nach Anspruch 8, **dadurch gekennzeichnet, dass** die Veränderung der Länge der Stützstreben (10,11) zumindest in einer Richtung gedämpft ist.

11. Landwirtschaftliche Maschine nach Anspruch 8, **dadurch gekennzeichnet, dass** der Überführung der Stützstreben (10,11) in ihre minimale Länge eine Federkraft entgegenwirkt.

## Claims

1. Agricultural machine having at least one process-performing component (5) which is supported on the ground by means of at least one supporting arrangement and which, by means of a carrying frame (1), can be hingeably hitched to a three-point raising arrangement (4) of an agricultural drawing and driving machine and which, when in the working and operating position, is able to pivot freely relative to the three-point raising arrangement (4), by means of the carrying frame (1), on an approximately vertical axis and on a horizontal axis aligned at right angles to the direction of travel, and which, in a raised position for transport, can be locked automatically in a position aligned in the direction of travel by the action of support struts (10, 11), the support struts (10, 11) extending between linkage points on a attaching frame (3) belonging to the three-point raising arrangement (4) and linkage points on the carrying frame (1), **characterised in that,** to link the supporting struts (10, 11) to the carrying frame (1), a shared supporting arrangement (14) is provided which is mounted on the carrying frame (1) by means of a connection which allows a movement in linear displacement and a pivoting movement.

2. Agricultural machine according to claim 1, **characterised in that,** when the process-performing component (5) is in the working and operating position, the supporting arrangement (14) for linking the support struts (10, 11) to the carrying frame (1) permits a pivoting movement on an approximately vertical axis (2).

3. Agricultural machine according to claim 1, **characterised in that,** in the position for transport, the supporting arrangement (14) for linking the support struts (10, 11) to the carrying frame (1) makes it possible for the process-performing component (5) to occupy a position which is aligned in the direction of travel.

4. Agricultural machine according to one of claims 1 to 3, **characterised in that** the supporting arrangement (14) comprises a pivoting plate (15) which, by means of a pin (18), is arranged in a mounting (20) of clevis form

5. Agricultural machine according to one of claims 1 to 4, **characterised in that** the pivoting plate (15) has a guide (19) in the form of a slotted hole to receive the pin (18).

6. Agricultural machine according to one of claims 1 to 5, **characterised in that** the pivoting plate (15) has a face for contact (21) which co-operates with a face for contact of the mounting (20) in clevis form.

7. Agricultural machine according to one of claims 1 to 6, **characterised in that** the support struts (10, 11) form a tetragonal arrangement with the linkage points on the attaching frame (3) and on the pivoting plate (15).

8. Agricultural machine according to one of claims 1 to 6, **characterised in that** the length of the support struts (10, 11) is able to vary telescopically.

9. Agricultural machine according to claim 8, **characterised in that** the length of the support struts (10, 11) is freely variable.

10. Agricultural machine according to claim 8, **characterised in that** the variation in the length of the support struts (10, 11) is damped in at least one direction.

11. Agricultural machine according to claim 8, **characterised in that** a spring-exerted force opposes the change of the support struts (10, 11) to their minimum length.

## Revendications

1. Machine agricole ayant au moins un outil (5) s'appuyant sur le sol par au moins une installation d'appui, cet outil étant relié de manière articulée par l'intermédiaire d'un châssis (1) à une installation de levage en trois points (4) d'un tracteur agricole, et en position de travail et de fonctionnement, par l'intermédiaire du châssis (1), l'outil peut pivoter librement autour d'un axe sensiblement vertical et d'un axe sensiblement horizontal, transversal à la direction de circulation, et dans une position de transport, relevée, l'outil est fixé automatiquement dans une position alignée dans la direction de circulation par l'action d'entretoises de support (10, 11),
les entretoises de support (10, 11) relient des points d'appui d'un cadre intermédiaire (3) de l'installation de levage en trois points (4) et les points d'articulation du châssis (1),
**caractérisée en ce que**
le châssis (1) comporte un dispositif de support (14), commun, pour relier par articulation, les entretoises de support (10, 11), ce dispositif de support étant monté sur le châssis (1) par une liaison permettant un mouvement de coulissement et un mouvement de pivotement.

2. Machine agricole selon la revendication 1,
**caractérisée en ce que**
le dispositif de support (14) permet un mouvement de pivotement, autour d'un axe sensiblement vertical (2), de l'articulation des entretoises de support (10, 11) au châssis (1) en position de travail et de fonctionnement de l'outil (5).

3. Machine agricole selon la revendication 1,
**caractérisée en ce que**
le dispositif (14) permet à l'outil (5) de prendre une position alignée sur la direction de circulation, à l'articulation des entretoises de support (10, 11) au châssis (1) en position de transport.

4. Machine agricole selon les revendications 1 à 3,
**caractérisée en ce que**
le dispositif de support (14) comporte une plaque pivotante (15) reliée par l'intermédiaire d'un goujon (18) à un moyen de fixation (20) en forme de fourche.

5. Machine agricole selon les revendications 1 à 4,
**caractérisée en ce que**
la plaque pivotante (15) comporte un guide formé d'un trou oblong (19) pour recevoir le goujon (18).

6. Machine agricole selon les revendications 1 à 5,
**caractérisée en ce que**
la plaque pivotante (15) comporte une surface d'appui (21) coopérant avec une surface d'appui du moyen de fixation (20) en forme de fourche.

7. Machine agricole selon les revendications 1 à 6,
**caractérisée en ce que**
les entretoises de support (10, 11) forment un quadrangle avec les points d'articulation au cadre intermédiaire (3) et à la plaque pivotante (15).

8. Machine agricole selon les revendications 1 à 6,
**caractérisée en ce que**
la longueur des entretoises de support (10, 11) est variable de manière télescopique.

9. Machine agricole selon la revendication 8,
**caractérisée en ce que**
les entretoises de support (10, 11) ont une longueur variant librement.

10. Machine agricole selon la revendication 8,
**caractérisée en ce que**
la variation de la longueur des entretoises de support (10, 11) est amortie au moins dans une direction.

11. Machine agricole selon la revendication 8,
**caractérisée en ce qu'**
une force de ressort s'oppose au passage des entretoises de support (10, 11) vers leur longueur minimale.
